# EUROPEAN PATENT APPLICATION

(11) **EP 3 467 353 A1**
(43) Date of publication of application: **10.04.2019**
(21) Application number: 17194832.6
(22) Date of filing: 04.10.2017
(51) Int. Cl.: F16H 61/00, F16H 3/093

(54) **A METHOD FOR CONTROLLING A TRANSMISSION**

(71) Applicant: Ningbo Geely Automobile Research & Development Co. Ltd., Hangzhou Bay New District Ningbo 315336 (CN)
(72) Inventor: LARSSON, Johannes, 41507 GÖTEBORG (SE)
(74) Representative: Zacco Sweden AB

(57) **Abstract**

The invention relates to a method for achieving a park lock function of a transmission. The method comprises the step of controlling the transmission such that two different gears of the transmission are activated and thereby locking the transmission.

## Description

### TECHNICAL FIELD

The invention relates to a method for achieving a park lock function of a transmission, a control unit for controlling a transmission, and a transmission.

### BACKGROUND

Vehicles are provided with a parking brake for keeping the vehicle stationary when it is parked. For vehicles with automatic transmissions, also a parking pawl mechanism is usually arranged to lock up the transmission, for example by locking the output shaft to the transmission casing. Such a park lock mechanism for an automatic transmission is controlled by a shift lever, i.e. when "Park" position is selected by means of the shift lever, the output shaft is locked and prevented from rotating. Some disadvantages with prior art park lock mechanisms exist due to the number of components and the complexity.

### SUMMARY

An objective of the invention is to provide a method for achieving a park lock function, by which method the complexity of a transmission can be reduced.

The objective is achieved by a method for achieving a park lock function of a transmission, comprising the step of controlling the transmission such that two different gears of the transmission are activated and thereby locking the transmission.

The invention is based on the insight that by activating two different gears, the transmission can be locked preventing the wheels connected to the transmission from rolling. This is favourable since hereby a conventional parking pawl mechanism can be dispensed with. Instead, when shift lever is put in "Park" position, two gears of the transmission are activated.

The expression "gears" herein relates to different gear positions having different gear ratios available during normal operation of the transmission. Of course, usually only one gear at a time is used during normal operation of the transmission and shifting between different gears is performed depending on the current road conditions and the velocity of the vehicle.

By the expression "locking the transmission" is meant that the transmission is put in a state preventing an output shaft of the transmission from rotating and thereby preventing any wheel coupled to the output shaft from rotating.

The park lock function can be reached by activating said two different gears at the same time or by activating said two different gears one gear at a time. In both cases, both gears should be activated within a limited period of time making the activation time of the park lock function suitable. Thereafter both gears remain activated for locking the transmission until the park lock function is deactivated.

By activating said two different gears at the same time, the required movement of components of the transmission can be performed simultaneously by one and the same activator.

In addition, should one of said two gears already be activated due to previous operation of the transmission, when the park lock function is to be used, it would also be possible to maintain this gear activated and activate the other gear only.

The activation of the park lock function is suitably performed automatically when a shift lever is brought to the "Park" position.

According to one embodiment of the method, wherein the transmission comprises an input shaft, a first output shaft and a second output shaft, and the first output shaft and the second output shaft are connectable to the input shaft by a first set of gear wheels, and the first output shaft and the second output shaft are connected to each other via a second set of gear wheels, the method comprising the step of connecting the first output shaft and the second output shaft to the input shaft for locking the transmission. Hereby, a park lock function of a transmission having two output shafts can be obtained utilizing the fact that the output shafts are connected to each other.

For example, the first output shaft represents a first gear associated with a first gear ratio when being connected to the input shaft, and the second output shaft represents a second gear associated with a second gear ratio different from the first gear ratio, when being connected to the input shaft. Since the first and second output shafts are connected to each other via the second set of gear wheels, the transmission will be locked.

According to a further embodiment, the method comprises the step of connecting the first output shaft to the input shaft via an idle gear wheel arranged on the first output shaft, preferably by means of a synchronizer device. Hereby, the connection of the first output shaft to the input shaft can be performed with no or just a few new or modified components.

According to a further embodiment, the method comprises the step of connecting the second output shaft to the input shaft via an idle gear wheel arranged on the second output shaft, preferably by means of a synchronizer device. Hereby, the connection of the second output shaft to the input shaft can be performed with no or just a few new or modified components.

According to a further embodiment of the method, the second set of gear wheels comprises a ring gear wheel of a differential device, a first output gear wheel arranged on the first output shaft connecting the first output shaft to the ring gear wheel and a second output gear wheel arranged on the second output shaft connecting the second output shaft to the ring gear wheel. Hereby, the method can be favourably applied since the fact that a vehicle transmission is usually connected to a differential device can be utilized making any additional connection between the first and second output shafts for locking the transmission needless.

According to a further aspect of the invention, a further objective is to provide a control unit, by which control unit the complexity of a transmission having a park lock function can be reduced.

This objective is achieved by a control unit configured to control a transmission such that two different gears of the transmission are activated and thereby lock the transmission for achieving a park lock function.

According to a further aspect of the invention, a further objective is to provide a transmission having a park lock function, which transmission has a reduced complexity.

This objective is achieved by a transmission having a shift mechanism for activating two different gears of the transmission such that said two different gears are activated at the same time and thereby locking the transmission.

The advantages of the control unit and the transmission are similar to the advantages already discussed hereinabove with reference to the different embodiments of the method. Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic view of a transmission,
Fig. 1b is a schematic side view of the transmission in Fig. 1,
Fig. 2 is a schematic view of a shift mechanism of the transmission in Fig. 1, and
Fig. 3 is a flow chart of an example embodiment of the method according to the invention.

### DETAILED DESCRIPTION OF EXAMPLE EMBODIMENTS

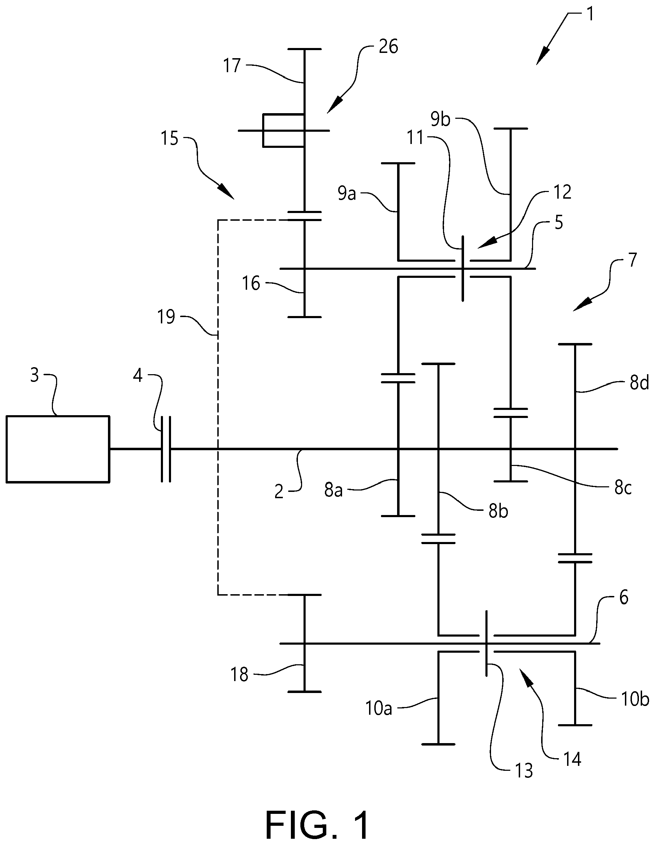

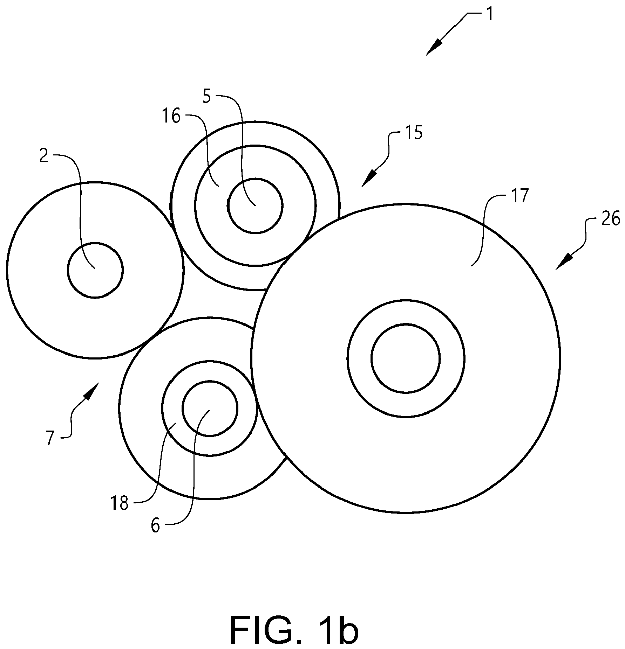

Fig. 1 is a schematic illustration of an example embodiment of a transmission 1 to which the method according to the invention can be applied. The transmission 1 has an input shaft 2 driven by a motor 3. The motor 3 can be any suitable motor, such an internal combustion engine, electric motor, etc. Between the motor and the transmission, a clutch 4 is arranged for enabling the transmission 1 to be connected or disconnected to/from the motor 3. The transmission further comprises a first output shaft 5 and a second output shaft 6.

The invention is advantageously applied to drive lines having a clutch that is open, i.e. the motor is disconnected from the transmission, when not activated in a parking situation. The transmission can comprise other types of clutch device. For example, if the transmission is a dual clutch transmission having two input shafts, the clutch device comprises two clutches for connecting/disconnecting the two input shafts representing two sets of gears.

In the example embodiment illustrated in Fig. 1, the first output shaft 5 and the second output shaft 6 are connectable to the input shaft 2 by a first set of gear wheels 7.

The input shaft 2 has gearwheels 8a, 8b, 8c, 8d that rotate with the input shaft 2. These gear wheels are engaged with gear wheels 9a, 9b, 10a, 10b arranged on the first output shaft 5 and the second output shaft 6. Further, as illustrated in Fig. 1, a first gear wheel 8a of the input shaft 2 is engaged with a first gear wheel 9a of the first output shaft 5, and a third gear wheel 8c of the input shaft 2 is engaged with a second gear wheel 9b of the first output shaft 5. A second gear wheel 8b of the input shaft 2 is engaged with a first gear wheel 10a of the second output shaft 6, and a fourth gear wheel 8d of the input shaft 2 is engaged with a second gear wheel 10b of the second output shaft 6.

The first and second gear wheels 9a, 9b, 10a, 10b of the first output shaft 5 and the second output shaft 6 are idle wheels, i.e. these gear wheels are journaled on the respective shaft but can be rotationally locked to the shaft by a synchronizer.

By movement of a synchronizer sleeve 11 of a first synchronizer 12 in the left direction, the first gear wheel 9a of the first output shaft 5 is rotationally locked to the first output shaft 5. By movement of the synchronizer sleeve 11 in the right direction, the second gear wheel 9b of the first output shaft 5 is rotationally locked to the first output shaft 5. Thus, one gear is represented by the first gear wheel 8a of the input shaft 2 and the first gear wheel 9a of the first output shaft 5. A further gear is represented by the third gear wheel 8c of the input shaft 2 and the second gear wheel 9b of the first output shaft 5.

In the same way, by movement of a synchronizer sleeve 13 of a second synchronizer 14 in the left direction, the first gear wheel 10a of the second output shaft 6 is rotationally locked to the second output shaft 6. By movement the synchronizer sleeve 13 in the right direction, the second gear wheel 10b of the second output shaft 6 is rotationally locked to the second output shaft 6. Thus, a further gear is represented by the second gear wheel 8b of the input shaft 2 and the first gear wheel 10a of the second output shaft 6. Still a further gear is represented by the fourth gear wheel 8d of the input shaft 2 and the second gear wheel 10b of the second output shaft 6.

The first output shaft 5 and the second output shaft 6 are connected to each other via a second set of gearwheels 15.

In the example embodiment illustrated in Fig. 1, the first output shaft 5 has a first output gear wheel 16. The first output gear wheel 16 is rotationally locked to the first output shaft 5 and is engaged with a ring gear wheel 17 of a differential device 26, thereby connecting the first output shaft 5 to the ring gear wheel 17. Further, the second output shaft 6 has a second output gear wheel 18. The second output gear wheel 18 is rotationally locked to the second output shaft 6 and is engaged with the ring gear wheel 17 of the differential device 26, thereby connecting the second output shaft 6 to the ring gear wheel 17. The connection of the second output gear wheel 18 to the ring gear wheel 17 is schematically illustrated by a dotted line 19.

The differential device 26 is in turn suitably conventionally connected to the driven wheels of a vehicle (not shown).

In Fig. 1b the transmission 1 is schematically illustrated in a side view where the transmission is locked. The first output shaft 5 and the second output shaft 6 are connected to the input shaft 2 via the first set of gear wheels 7, and the first output shaft 5 and the second output shaft 6 are connected to each other via a second set of gear wheels 15. The first set of gear wheels 7 may comprise any suitable combination of a gear wheel on the input shaft and a gear wheel on the first output shaft which are engaged with each other, and a gear wheel on the input shaft and a gear wheel on the second output shaft which are engaged with each other, as described hereinabove. The second set of gear wheels 15 can comprise the first output gear wheel 16, the second output gearwheel 18 and the ring gearwheel 17 of the differential device 26.

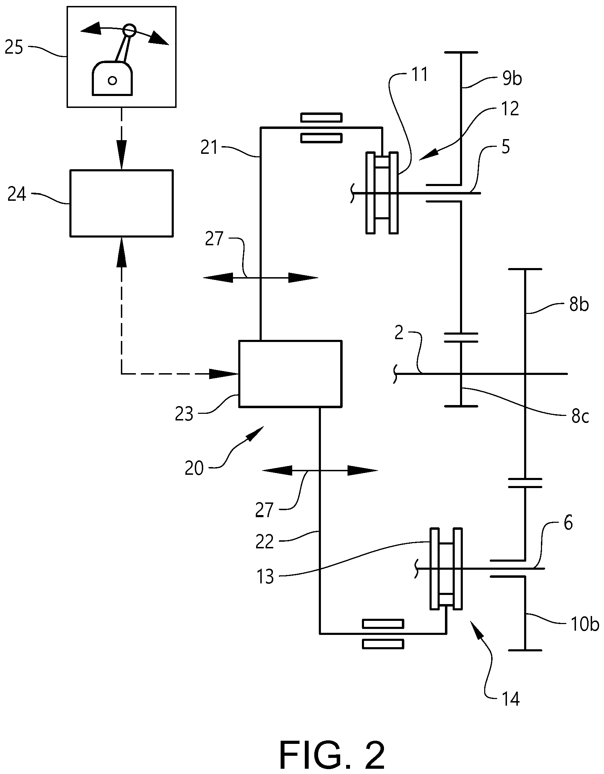

Fig. 2 shows a schematic view of a shift mechanism 20 and a part of the transmission 1 illustrated in Fig. 1. The shift mechanism 20 can be used for activating two different gears of the transmission 1 such that said two different gears are activated at the same time, thereby locking the transmission. The shift mechanism 20 is arranged to activate connection between the first output shaft 5 and the input shaft 2 and between the second output shaft 6 and the input shaft 2, for locking the transmission. The shift mechanism 20 can comprise a first arm 21 for displacement of the synchronizer sleeve 11 of the first synchronizer 12 arranged on the first output shaft 5, and a second arm 22 for displacement of the synchronizer sleeve 13 of the second synchronizer 14 arranged on the second output shaft 6. The first arm 21 is preferably connected to the synchronizer sleeve 11 of the first synchronizer 12 and guided for linear motion. The second arm 22 is preferably connected to the synchronizer sleeve 13 of the second synchronizer 14 and guided for linear motion.

Further, the shift mechanism 20 comprises a drive unit 23. Each arm 21, 22 can be displaced in the direction 27 of the respective longitudinal axis of the first and second output shaft 5, 6. The drive unit 23 can be used for displacing both arms 21, 22 at the same time or one arm at a time. For the movement of such an arm, the drive unit may include an electric motor, hydraulics, or any suitable device enabling the synchronizer sleeve to be displaced to the gear positions and an intermediate neutral position. The shift mechanism 20 can be a separate device, but the shift mechanism 20 is preferably a part of the shifting mechanism used for shifting gears during normal operation of the transmission 1. In the latter case, each arm 21, 22 has to be displaceable individually by means of the drive unit 23 when shifting gears.

As described hereinabove, by movement of the synchronizer sleeve 11 of the first synchronizer 12 to the second gear wheel 9b of the first output shaft 5 and movement of the synchronizer sleeve 13 of the second synchronizer 14 to the second gear wheel 10b of the second output shaft 6, two different gears will be activated and the ring gear wheel 17 will be locked against rotation since both the first output shaft 5 and the second output shaft 6 are connected to the ring gear wheel 17 via the first output gear wheel 16 and the second output gear wheel 18, respectively. See also Figs. 1 and 1 b. Of course, also other combinations of two different gears are possible for locking the transmission.

As schematically illustrated in Fig. 2, for performing the method as described herein, a control unit 24 for controlling the shift mechanism 20 is provided. The control unit 24 is configured to control the transmission 1 such that two different gears of the transmission are activated and thereby lock the transmission for achieving a park lock function. A shift lever 25 is electrically connected to the control unit 24 for transferring signals from the shift lever 25 to the control unit 24. The control unit 24 is electrically connected to the shift mechanism 20 for transferring signals between the control unit 24 and the shift mechanism 20. Thus, when the shift lever 25 is put in the position "Park", the control unit 24 receives a corresponding signal from the shift lever 25, and the control unit 24 will send a signal to the shift mechanism 20 to activate two predetermined different gears for obtaining the park lock function.

The control unit 24 may comprise one or more microprocessors and/or one or more memory devices or any other components for executing computer programs to perform the method. Thus, the control unit 24 is preferably provided with a computer program for performing all steps of any embodiment of the method described herein. Furthermore, the control unit 24 can be part of a controller used also for other functions of the shift mechanism 20 or any other function of the transmission 1 or be provided as a separate unit.

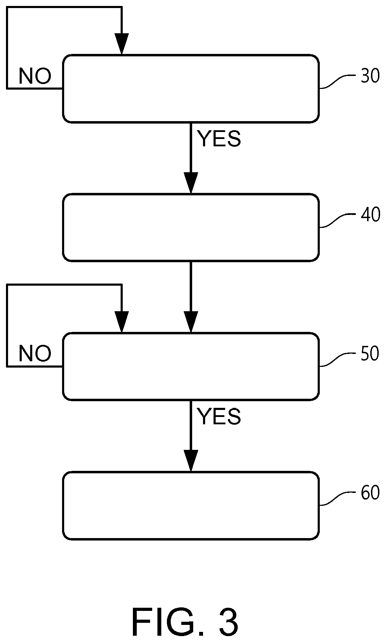

In Fig. 3 an example embodiment of the method according to the invention is illustrated. See also Fig. 2. In a first step 30, the control unit 24 checks for a signal indicating that the shift lever 25 is brought into the position "Park". If "NO", i.e. no such signal is received by the control unit 24 from the shift lever 25, no action is performed. If "YES", i.e. such a signal is received by the control unit 24 from the shift lever 25, in a second step 40, the control unit 24 controls the shift mechanism 20 such that two different gears of the transmission are activated and thereby lock the transmission.

In a third step 50, the control unit 24 checks for a signal indicating that the shift lever 25 is brought to another position different from "Park". If "NO", i.e. no such signal is received from the shift lever 25, no action is performed but the park lock function is maintained. If "YES, i.e. such a signal is received, in a fourth step 60, the control unit 24 controls the shift mechanism 20 to deactivate one or more of said two different gears for releasing the park lock function. Thereafter the loop is repeated from the first step 30.

For example, the transmission may comprise an input shaft 2, a first output shaft 5 and a second output shaft 6, where the first output shaft 5 and the second output shaft 6 are connectable to the input shaft 2 by a first set of gear wheels 7, and the first output shaft 5 and the second output shaft 6 are connected to each other via a second set of gear wheels 15, then the method may comprise the step of connecting the first output shaft 5 and the second output shaft 6 to the input shaft 2 for locking the transmission 1.

The connection between the first output shaft 5 and the input shaft 2 represents a first gear of the transmission during operation. The connection between the second output shaft 6 and the input shaft 2 represents a second gear of the transmission during operation.

The first output shaft 5 is preferably connected to the input shaft 2 via an idle gear wheel 9b arranged on the first output shaft 5 by moving a sleeve 11 of a synchronizer device 12. The second output shaft 6 is preferably connected to the input shaft 2 via an idle gear wheel 10b arranged on the second output 6 shaft by moving a sleeve 13 of a synchronizer device 14.

It is to be understood that the present invention is not limited to the embodiments described above and illustrated in the drawings; rather, the skilled person will recognize that many changes and modifications may be made within the scope of the appended claims.

## Claims

1. A method for achieving a park lock function of a transmission (1), **characterized by** controlling the transmission such that two different gears of the transmission are activated and thereby locking the transmission.

2. A method according to claim 1, the transmission (1) comprising an input shaft (2), a first output shaft (5) and a second output shaft (6), the first output shaft and the second output shaft being connectable to the input shaft by a first set of gear wheels (7), the first output shaft and the second output shaft being connected to each other via a second set of gear wheels (15), **characterized by** connecting the first output shaft (5) and the second output shaft (6) to the input shaft (2) for locking the transmission (1).

3. A method according to claim 2, **characterized by** connecting the first output shaft (5) to the input shaft (2) via an idle gear wheel (9b) arranged on the first output shaft (5).

4. A method according to claim 3, **characterized by** connecting the first output shaft (5) to the input shaft (2) by moving a sleeve (11) of a synchronizer device (12).

5. A method according to any of claims 2-4, **characterized by** connecting the second output shaft (6) to the input shaft (2) via an idle gear wheel (10b) arranged on the second output shaft (6).

6. A method according to claim 5, **characterized by** connecting the second output shaft (6) to the input shaft (2) by moving a sleeve (13) of a synchronizer device (14).

7. A method according to any of claims 2-6, wherein the connection between the first output shaft (5) and the input shaft (2) represents a first gear of the transmission during operation.

8. A method according to any of claims 2-7, wherein the connection between the second output shaft (6) and the input shaft (2) represents a second gear of the transmission during operation.

9. A method according to any of claims 2-8, wherein the second set of gear wheels (15) comprises a ring gear wheel (17) of a differential device (26), a first output gear wheel (16) arranged on the first output shaft (5) connecting the first output shaft to the ring gear wheel and a second output gear wheel (18) arranged on the second output shaft (6) connecting the second output shaft to the ring gear wheel.

10. A method according to any preceding claim, **characterized by** activating said two different gears at the same time.

11. A method according to any of claims 2-9, **characterized by** activating said two different gears one gear at a time.

12. A control unit (24) for controlling a transmission (1), **characterized in that** the control unit is configured to control the transmission such that two different gears of the transmission are activated and thereby lock the transmission for achieving a park lock function.

13. A computer program comprising program code means for performing a method according to any of claims 1-11.

14. A transmission (1), **characterized in that** the transmission (1) has a shift mechanism (20) for activating two different gears of the transmission such that said two different gears are activated at the same time and thereby locking the transmission.

15. A transmission (1) according to claim 14, the transmission comprising an input shaft (2), a first output shaft (5) and a second output shaft (6), the first output shaft and the second output shaft being connectable to the input shaft by a first set of gear wheels (7), the first output shaft (5) and the second output shaft (6) being connected to each other via a second set of gear wheels (15), **characterized in that** the shift mechanism (20) is arranged to activate connection between the first output shaft (5) and the input shaft (2), and between the second output shaft (6) and the input shaft (2), for locking the transmission (1).

16. A transmission (1) according to claim 15, **characterized in that** the second set of gear wheels (15) comprises a ring gear wheel (17) of a differential device (26), a first output gear wheel (16) arranged on the first output shaft (5) connecting the first output shaft to the ring gear wheel and a second output gear wheel (18) arranged on the second output shaft (6) connecting the second output shaft to the ring gearwheel.
